(19) Europäisches Patentamt
European Patent Office
Office européen des brevets

(11) **EP 2 353 766 B1**

(12) **EUROPÄISCHE PATENTSCHRIFT**

(45) Veröffentlichungstag und Bekanntmachung des Hinweises auf die Patenterteilung:
**06.12.2017 Patentblatt 2017/49**

(51) Int Cl.:
**B23K 11/11** (2006.01)     **B23K 11/24** (2006.01)
**B23K 11/25** (2006.01)     **B23K 11/30** (2006.01)
**B23K 11/31** (2006.01)

(21) Anmeldenummer: **11152682.8**

(22) Anmeldetag: **31.01.2011**

(54) **Serviceeinrichtung und Serviceverfahren für eine Schweißeinrichtung mit einer Kalibriereinrichtung einer Messeinrichtung**

Service device and method for a welding system with a calibration device for a sensing means

Dispositif de service et procédé de service pour un dispositif de soudage ayant un système de calibration pour un capteur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.02.2010 DE 202010000107 U**

(43) Veröffentlichungstag der Anmeldung:
**10.08.2011 Patentblatt 2011/32**

(73) Patentinhaber: **KUKA Systems GmbH**
**86165 Augsburg (DE)**

(72) Erfinder: **Dietrich, Simon**
**86169 Augsburg (DE)**

(74) Vertreter: **Ernicke, Klaus Stefan**
**Ernicke & Ernicke**
**Beim Glaspalast 1**
**86153 Augsburg (DE)**

(56) Entgegenhaltungen:
**WO-A1-03/008145     DE-U1- 20 106 635**
**US-A- 2 739 215**

- **DATABASE WPI Week 199442 Thomson Scientific, London, GB; AN 1994-339457 XP002660134, -& SU 1 816 604 A1 (TOLYATTI POLY) 23. Mai 1993 (1993-05-23)**

EP 2 353 766 B1

**Beschreibung**

Die Erfindung betrifft eine Serviceeinrichtung und ein Serviceverfahren für elektrische Schweißeinrichtungen mit den Merkmalen im Oberbegriff der Ansprüche 1 und 10 (siehe, z.B., US 2 739 215 A). Bei Schweißeinrichtungen, insbesondere für automatisierte und robotergestützte Schweißprozesse, ist es zur Verbesserung und Absicherung der Prozessqualität bedeutsam, dass der Steuer- und Versorgungseinrichtung die wichtigsten Kenngrößen der Schweißgeräte oder Schweißwerkzeuge so genau wie möglich bekannt sind. Bislang können die Kenngrößen nur unzureichend erfasst werden.

Die US 2 739 215 A zeigt eine Einrichtung zur Messung, Auswertung und Überwachung des Schweißstroms an einer elektrischen Widerstandsschweißvorrichtung. Die Messeinrichtung kann im Stand-by-Modus kalibriert werden. Die Strommessung erfolgt nur an einer Stelle durch eine Spule an der Leitung im Primärstromkreis der Pressschweißvorrichtung.

Der DE 201 06 635 U befasst sich mit einer Kappenfräsanlage, die einen einzelnen einschwenkbaren ringförmigen Stromsensor für die Prüfung des Schweißstroms der bearbeiteten Elektrode aufweist.

Aus der WO 03/008145 A1 ist eine elektrische Widerstandsschweißvorrichtung bekannt, deren Schweißzange hinsichtlich Zangenkraft und Zangenposition kalibriert werden kann. Ein Elektrodenkontakt mit einem Werkstück kann mittels einer elektrischen Kontaktsensorik detektiert werden.

Es ist daher Aufgabe der vorliegenden Erfindung, eine bessere Möglichkeit zur Kenngrößenerfassung aufzuzeigen.

Die Erfindung löst diese Aufgabe mit mit einer Serviceeinrichtung und ein Serviceverfahren mit den Merkmalen/Schritten der Ansprüche 1 und 10. Die Serviceeinrichtung und das Serviceverfahren sind für elektrische Schweißeinrichtungen und elektrische Schweißgeräte, insbesondere in Form von elektrischen Punktschweißzangen, geeignet. Besondere Vorteile bestehen bei automatisierten und manipulatorgestützten Schweißprozessen, bei denen ein Werkstück und/oder ein Schweißgerät von einem mehrachsigen programmierbaren Manipulator, insbesondere einem Roboter, gehandhabt werden. Die genaue Erfassungsmöglichkeit für eine oder mehrere Kenngrößen ist hierbei von besonderer Bedeutung.

Die beanspruchte Serviceeinrichtung und das Serviceverfahren sind bevorzugt für den automatisierten Betrieb einer Schweißvorrichtung mit einem mehrachsigen programmierbaren Manipulator zur Handhabung eines Werkstücks und/oder eines Schweißgerät, insbesondere einer elektrischen Widerstandsschweißzange, vorgesehen und ausgebildet.

Die Erfindung befasst sich vorzugsweise mit dem Widerstandspunktschweißen, wobei eine genaue Steuerung oder Regelung der Schweißenergie, der Elektrodenkraft und des Zangenausgleichs einer elektrischen Punktschweißzange möglich sind. Die Schweißenergie kann nach der Erfindung über den Schweißstrom und/oder die Schweißspannung und/oder die Schweißleistung gesteuert oder geregelt werden. Durch die mit der Serviceeinrichtung erlangbaren genauen Kenntnis der aktuellen elektrischen und mechanischen Kenngrößen des Schweißgeräts, insbesondere einer Punktschweißzange, kann eine hohe Güte der Steuerung oder Regelung und des Schweißprozesses erreicht werden. Insbesondere kann das Schweißgerät genau modelliert werden, was die Steuerungs- und Regelungsgenauigkeit steigert.

Die Serviceeinrichtung kann eine eigenständige Einheit sein. Sie kann auch in eine Steuer- und Versorgungseinrichtung integriert und zu deren Bestandteil werden. Teile der Serviceeinrichtung können ferner als Softwaremodul in einer Steuer- und Versorgungseinrichtung integriert sein.

Die Serviceeinrichtung erlaubt es, eine oder mehrere prozessrelevante Kenngrößen zu erfassen. Dies dauert nur kurze Zeit und verlangt keinen hohen Geräteaufwand. Eine Kenngrößenerfassung, insbesondere eine Kalibrierung, kann in kurzen Prozesspausen während des Schweißbetriebs stattfinden. Dadurch ist immer eine aktuelle und prozessnahe Erfassung oder Kalibrierung möglich. Werden etwaige prozessrelevante Veränderungen einer Kenngröße festgestellt, kann hierauf zeitnah und zielgerichtet reagiert werden. Dies verbessert die Güte und Stabilität des Schweißprozesses und kann in Verbindung mit einer geeigneten Dokumentation für eine Qualitätssicherung und für Qualitätsnachweise herangezogen werden.

Die Serviceeinrichtung kann einerseits eine Kalibriereinrichtung für eine Messeinrichtung des Schweißstroms, insbesondere einen Stromsensor, aufweisen. Diese Kalibrierung kann besonders schnell und genau durchgeführt werden und erfordert nur einen geringen Bau- und Handhabungsaufwand. Sie lässt sich automatisieren und kann daher mehrmals regelmäßig bzw. zyklisch im Schweißbetrieb durchgeführt werden.

Zur Kalibrierung reicht ein geeichter Referenz-Stromsensor mit Anschluss an die Steuer- und Versorgungseinrichtung aus. Auf zusätzliche externe, teuere und relativ ungenaue Messgeräte zur Referenz-Messung des Schweißstroms, z.B. über manuell an undefinierten Stellen eingehängte und variablen Umgebungseinflüssen ausgesetzte Strommessgürtel, kann ggf. verzichtet werden. Es genügt, eine vorhandene Hardware, z.B. einen Schweißumrichter, zu ergänzen und mit einem zusätzlich Eingang bzw. Stromkanal für den Referenz-Stromsensor auszustatten. Der Schweißumrichter kann ferner mit einer Auswerteeinrichtung oder Auswertefunktion ergänzt werden, wobei weitgehend ein Rückgriff auf vorhandene Hard- und Software möglich ist. Manuelle Tätigkeiten bei der Kalibrierung sind entbehrlich.

Fehlereinflüsse bei der Kalibrierung können ausgeschaltet werden, z.B. durch eine gleichartige und gleichzeitige Strommessung. Auch eine Gleichartigkeit der Stromsensoren ist hierfür günstig. Besonders vorteilhaft ist die Kopplungsmöglichkeit der taktweisen Strommessung und Sensor-Kalibrierung an die pulsweise Stromgenerierung, was eine besonders hohe Kalibriergenauigkeit und Prozessrelevanz bringt. Ferner kann durch vorzeitiges Einschalten der Kalibrierung die Strommessung aktiviert werden, bevor der Stromimpuls beginnt. Der Impuls kann in vollem Umfang erfasst werden. Dies ist günstiger als bei vorbekannten Messtechniken, bei denen die Messung vom Spannungs- oder Stromanstieg getriggert wird. Die Kalibrierung kann unter definierten Bedingungen und in reproduzierbarer Weise erfolgen. Die Kalibrierung mit einer Referenz-Messeinrichtung im Arbeitsbereich kann schnell von statten gehen. Zeitgleich oder zeitnah kann außerdem eine Erfassung von ein oder mehreren weiteren Kenngrößen erfolgen.

Die Kalibrierung der Messeinrichtung erhöht die Steuer- und Regelgenauigkeit der Steuer- und Versorgungseinrichtung, insbesondere der Stromsteuerung. An Hand der exakt erfassbaren Stromstärken im Schweißgerät können außerdem genaue Modelle zur Erfassung von nicht direkt messbaren Kenngrößen, wie z.B. der an der Schweißstelle abfallenden Schweißspannung oder dem dortigen elektrischen Schweißwiderstand, gebildet werden. Eine exakte Kalibrierung der Messeinrichtung, insbesondere eines Stromsensors, hat daher auch Vorteile für andere Kenngrößenerfassungen.

Die Serviceeinrichtung kann im weiteren alternativ oder zusätzlich eine Erfassungseinrichtung für den elektrischen Widerstand des Schweißgeräts, insbesondere dessen ohmschen Widerstand, aufweisen. Die Widerstandserfassung kann messtechnisch und/oder rechnerisch erfolgen. Über diese Kenngröße können etwaige prozessrelevante Veränderungen des Schweißgeräts, insbesondere an biegeelastischen Stromzuführungen zu den Zangenarmen einer Schweißzange, erfasst und registriert werden. Hierbei kann auch ein Trend festgestellt werden, mit dem etwaige Schäden am Schweißgerät, insbesondere Brüche an der üblicherweise aus mehreren Blechlagen gebildeten Stromzuführung, rechtzeitig entdeckt und behoben werden können. Eine an der realen Situation orientierte vorbeugende Instandhaltung des Schweißgeräts wird dadurch möglich. Außerdem kann die Steuer- und Regelgenauigkeit erhöht sowie die Erfassung anderer Kenngrößen erleichtert und unterstützt werden.

Die Kalibrierung der Schweißstrom-Messeinrichtung und die Erfassung des elektrischen Widerstands des Schweißgeräts können beim selben Vorgang und zeitgleich oder zumindest schnell hintereinander stattfinden. Hierfür braucht die externe Messeinrichtung der Kalibriereinrichtung, die insbesondere als Stromsensor ausgebildet ist, nur einmal betätigt zu werden. Diese Kalibrierung und Erfassung kann automatisch erfolgen und kann in den Schweißprozess zu vorgegebenen Zeitpunkten oder bedarfsweise je nach Ergebnissen integriert werden.

Bei Schweißprozessen mit zangen- oder bügelförmigen Schweißgeräten ist auch die Induktivität bedeutsam, wobei deren Wert vom Werkstück und seiner Eintauchtiefe in die Zangen- oder Bügelöffnung beeinflusst sein kann. Die Eintauchtiefe kann variieren. Durch eine auf den Arbeitspunkt bezogene Induktivitätserfassung ist eine hohe Genauigkeit bei der Steuerung und Regelung möglich.

Die verschiedenen Komponenten der Serviceeinrichtung und die Kenngrößenerfassungen erlauben außerdem eine gegenüber dem Stand der Technik verbesserte adaptive Regelung des Schweißprozesses. Hierbei kann über ein Modell unter Berücksichtigung der Eingangsspannung, des zeitabhängigen Schweißstroms, des elektrischen Widerstands und der Induktivität des Schweißgeräts die tatsächliche Schweißspannung am Arbeitspunkt bzw. an der Schweißstelle erfasst werden. Desgleichen ist auch eine Erfassung des elektrischen bzw. ohmschen Widerstandes an dieser Stelle möglich. Etwaige Veränderungen des Widerstandes können nach der Erfindung über die Anpresskraft des Schweißgeräts, insbesondere seiner Elektroden, korrigiert werden.

Bisherige adaptive Regelungen reagieren mit einer Veränderung der Schweißparameter Spannung und/oder Strom, was einen signifikanten Prozesseingriff und entsprechende Güteänderungen und Ungenauigkeiten zur Folge hat. Insbesondere sind die Auswirkungen eines solchen Eingriffs beim Stand der Technik nicht sicher beherrschbar.

Die erfindungsgemäße Ansteuerung der Anpresskraft erlaubt es, die eingestellten Schweißparameter Strom und Spannung bzw. deren Regelung beizubehalten, wobei insbesondere für die Schweißspannung Schwell- oder Toleranzgrenzen, z.B. in Form von ermittelten Referenzkurven, vorgegeben sein können. Eine Verstärkung der Andruckkraft und eine entsprechende Vergrößerung der Elektrodenkontaktfläche kann zu einer Verringerung des Übergangswiderstandes an der Schweißstelle und zu einer Minderung des dortigen Spannungsabfalls führen. Umgekehrt führt eine Kraftreduzierung zu einer Erhöhung des Übergangswiderstandes und zu einer Steigerung des Spannungsabfalls. Diese Spannungsänderungen können beobachtet und im vorgenannten Toleranzfeld gehalten werden. Die Spannungsänderungen können durch eine gezielte Ansteuerung der Anpresskraft mit hoher Genauigkeit beeinflusst werden. Innerhalb eines z.B. durch Vergleichsschweißungen ermittelten Toleranzfeldes sind die vorgegebenen Schweißqualitäten einhaltbar.

In der bevorzugten Ausführungsform ist das Schweißgerät als elektrische Punktschweißzange, insbesondere als X-Zange oder als C-Zange ausgebildet, und weist einen steuerbaren und vorzugsweise elektrischen Zangenantrieb auf, der zur gewünschen Veränderung der Anpresskraft oder Schließkraft schnell und genau angesteuert werden kann.

Hierfür ist es möglich, dass das Schweißgerät, insbesondere die elektrische Punktschweißzange, im Schweißprozess mit einer Kraft- oder Momentenregelung betrieben wird, die den Zangenantrieb ohnehin in Bewegung und unter Energie hält. Der Zangenantrieb kann auch anders ausgebildet sein, z.B. als hydraulischer, pneumatischer oder servo-pneumatischer Antrieb.

Die erfindungsgemäße Kalibrier- und Erfassungstechnik, insbesondere die Serviceeinrichtung und deren ein oder mehrere Einrichtungskomponenten sind kostengünstig und platzsparend. Die Erfindung bietet daher auch wirtschaftliche Vorteile bei der Kenngrößenerfassung und der genauen Steuerung oder Regelung des Schweißprozesses. Insbesondere kann der Endkunde und Prozessanwender die Kenngrößenerfassung ohne fremde Hilfe durchführen und auswerten. Die Kalibrierung bzw. Erfassung kann automatisiert werden. Sie kann insbesondere in die Schweißzyklen ohne signifikante Zeit- und Kapazitätsverluste integriert werden. Die hierdurch bedingten Qualitätssteigerungen sind auf einfachem und wirtschaftlichem Wege erreichbar.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:

Figur 1: eine schematische Seitenansicht einer Bearbeitungsstation mit einer automatisierten Schweißvorrichtung und einer Serviceeinrichtung,

Figur 2: eine vergrößerte und abgebrochene Seitenansicht der Andruckstellung von Elektroden an einem Stromsensor,

Figur 3: eine Seitenansicht einer X-Punktschweißzange mit einem Werkstück,

Figur 4: ein schematischer Schaltplan einer Steuer- und Versorgungseinrichtung und einer Serviceeinrichtung für ein Schweißgerät bei der Stromkalibrierung,

Figur 5: eine Schemadarstellung des Schaltbilds von Figur 4 mit einer anderen Anordnung eines Stromsensors und einem Spannungsabgriff am Schweißgerät,

Figur 6: ein Diagramm für den zeitbezogenen Stromverlauf eines Schweißimpulses und

Figur 7: eine Schemadarstellung eines elektrischen Ersatzschaltbilds für ein Schweißgerät.

Die Erfindung betrifft eine Serviceeinrichtung (2) und ein Serviceverfahren, insbesondere ein Kalibrierverfahren, für Schweißvorrichtungen (8), insbesondere elektrische Schweißvorrichtungen.

Die Serviceeinrichtung (2) hat eine oder mehrere Kalibrier- und Erfassungseinrichtungen (3,4,5). Die Schweißvorrichtung (8) weist mindestens ein Schweißgerät (9) sowie mindestens eine angeschlossene Steuer- und Versorgungseinrichtung (10) auf. Die Erfindung betrifft außerdem die Kalibrier- und Erfassungsverfahren für eine oder mehrere Kenngrößen des Schweißprozesses. Die Erfindung betrifft ferner eine adaptive Regelung des Schweißprozesses und eine adaptive Regeleinrichtung (6).

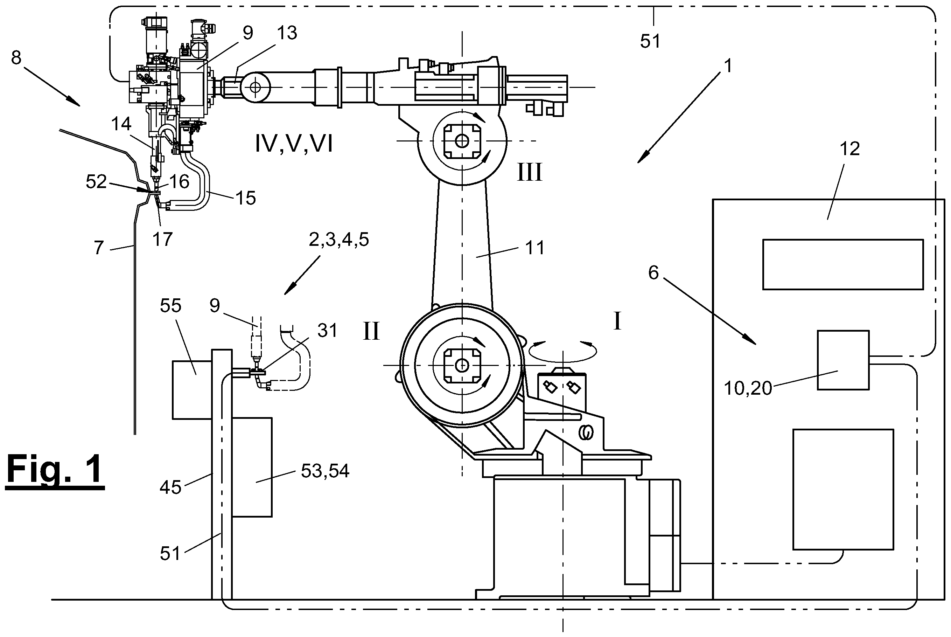

Figur 1 zeigt eine Bearbeitungsstation (1) für ein oder mehrere Werkstücke (7), an denen ein Schweißprozess durchgeführt wird. Die Bearbeitungsstation (1) ist hierzu bevorzugt als Schweißstation ausgebildet. Der Schweißprozess ist vorzugsweise elektrischer Art.

Das Schweißgerät (9) ist z.B. als Schweißzange, insbesondere als elektrische Schweißzange, z.B. elektrische Widerstands-Punktschweißzange, ausgebildet. Die Steuer- und Versorgungseinrichtung (10) steuert und regelt ggf. den Schweißprozess und dessen Parameter. Sie sorgt auch für die Betriebsmittelzufuhr, insbesondere die Zufuhr von elektrischer Energie, Kühlmittel oder dgl. zum Schweißgerät (9) mittels ein oder mehrerer geeigneter Leitungen (51). Die Steuer- und Versorgungseinrichtung (10) ist an eine elektrische Stromquelle, insbesondere ein Drehstromnetz (nicht dargestellt) angeschlossen.

Die Schweißvorrichtung (8) ist mit mindestens einem mehrachsigen und programmierbaren Manipulator (11) verbunden. Dieser dient zur Handhabung eines Werkstücks (7) und/oder eines Schweißgeräts (9). Im gezeigten Ausführungsbeispiel ist das Werkstück (7) stationär angeordnet, wobei der Manipulator (11) ein Schweißgerät (9) handhabt und bewegt. Alternativ kann der Manipulator (11) ein Werkstück (7) gegenüber einem stationären Schweißgerät (9) bewegen. In weiterer Abwandlung können zwei oder mehr Manipulatoren (11) vorhanden sein, die ein Werkstück (7) und ein Schweißgerät (9) relativ zueinander bewegen. Der Manipulator (11) ist flurgebunden und stehend angeordnet, wobei er alternativ hängend an einem Portal oder an einer Wand oder dgl. angeordnet sein kann.

Der Manipulator (11) kann eine beliebige Zahl und Kombination von rotatorischen und/oder translatorischen Achsen aufweisen. In der gezeigten Ausführungsform ist er als fünf- oder sechsachsiger Gelenkarmroboter ausgebildet, der mehrere Roboterarme mit z.B. drei rotatorischen Grundachsen (I, II, III) sowie eine mehrachsige Roboterhand (13) mit z.B. zwei oder drei orthogonalen rotatorischen Handachsen (IV,V,VI) aufweist. Bedarfsweise kann zur Vergrößerung des Arbeitsbereichs eine zusätzlich Fahr- oder Schwenkachse vorhanden sein. Abweichend vom gezeigten Ausführungsbeispiel kann der Manipulator (11) beliebige andere konstruktive und kinematische Ausbildungen haben. Der Manipulator (11) weist ferner eine Robotersteuerung (12) auf.

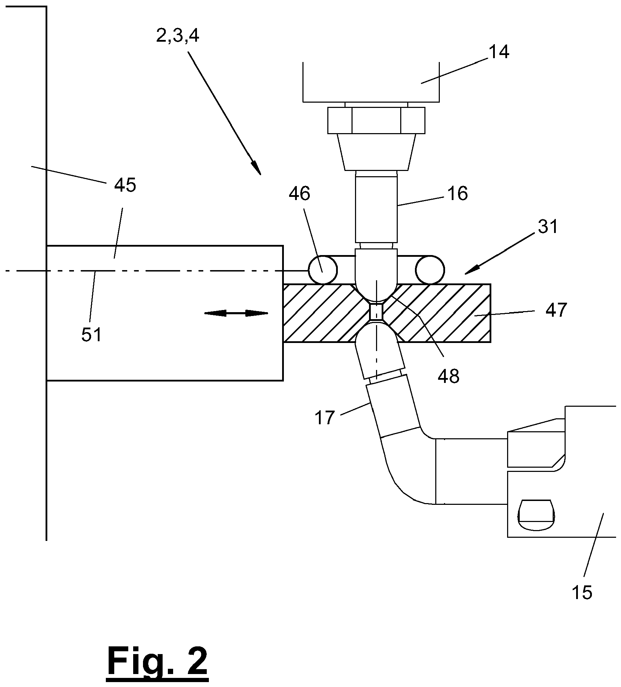

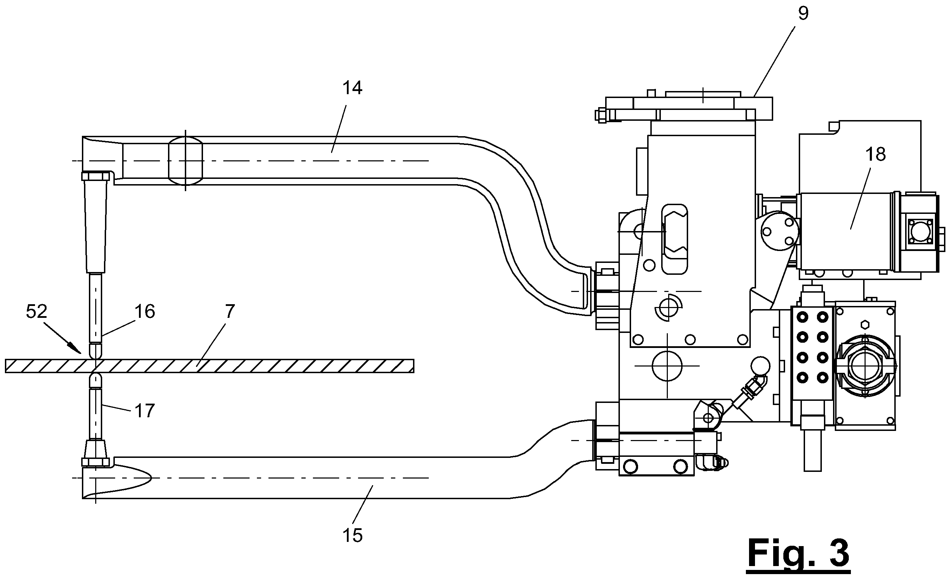

Das Schweißgerät (9) ist in den dargestellten Ausführungsbeispielen als elektrische Punktschweißzange ausgebildet, die zwei Zangenarme (14,15) mit einem Zangenantrieb (18) und Elektroden (16,17) an den Armenden aufweist. Der Zangenarm (14) kann beweglich und vom Zangenantrieb (18) beaufschlagt sein. Der andere Zangenarm (15) kann fest sein. Die Punktschweißzange ist z.B. gemäß der Ausführungsform von Figur 1 und 2 als C-Zange mit einem verschieblichen Zangenarm (14) oder gemäß Figur 3 als X-Zange mit einem schwenkbaren Zangenarm (14) ausgebildet. Die Elektroden (16,17) können jeweils einen Elektrodenschaft mit einer lösbaren Elektrodenkappe am Schaftende aufweisen. Die Elektrodenkappen bedürfen im Verlauf des Schweißprozesses gelegentlich einer Nachbearbeitung. Die Schweißzange (9) ist an der Roboterhand (13), insbesondere an deren drehbarem Abtriebsflansch befestigt, wobei ggf. eine Wechselkupplung zwischengeschaltet sein kann.

Das Werkstück (7) kann von beliebiger Art und Größe sein. Es besteht im gezeigten Ausführungsbeispiel aus Metall und kann zwei, drei oder mehr zu verschweißende Materiallagen, insbesondere Blechlagen, aufweisen. Für andere Schweißprozesse kann das Werkstück (7) auch aus einem anderen Material bestehen.

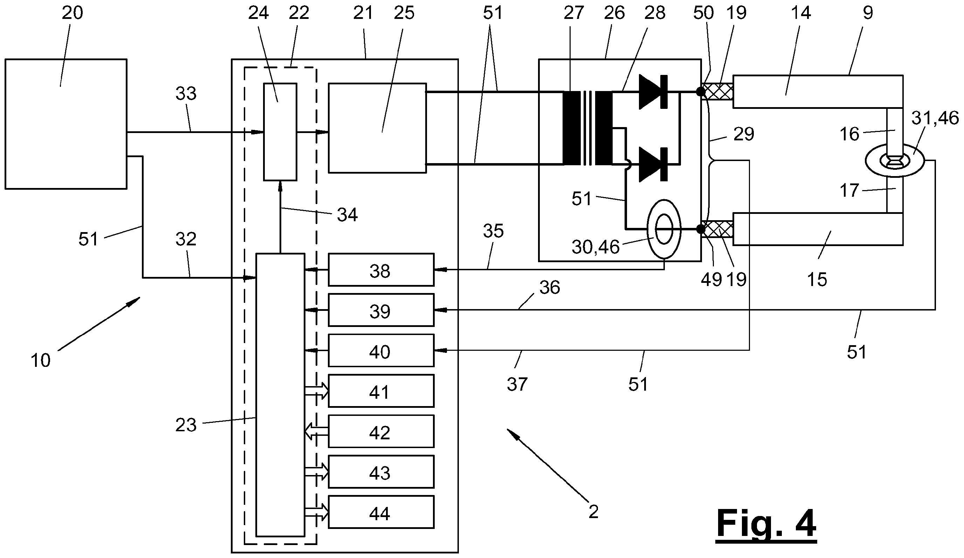

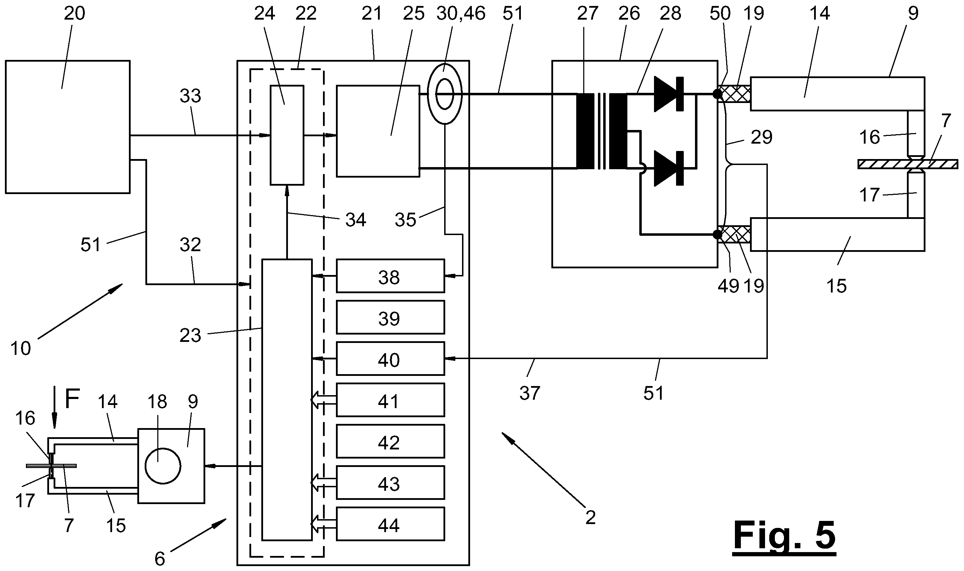

Figur 4 und 5 zeigen schematisch und beispielhaft den Aufbau einer Steuer- und Versorgungseinrichtung (10). In Figur 4 ist dabei ein Kalibrier- und Erfassungsmodus und in Figur 5 ein Schweißmodus mit einem Werkstück (7) dargestellt.

Die Steuer- und Versorgungseinrichtung (10) weist eine Schweißsteuerung (20), einen Schweißumrichter (21) und einen Schweißgleichrichter (26) auf, welcher z.B. gemäß Figur 3 dem Schweißgerät (9) zugeordnet und dort befestigt sein kann. Er kann alternativ auch an anderer Stelle angeordnet sein. Die anderen Komponenten der Steuer- und Versorgungseinrichtung (10), insbesondere die Schweißsteuerung (20) und der Schweißumrichter (21), können in einem eigenständigen Gerät untergebracht sein. Sie können andererseits wie im gezeigten Ausführungsbeispiel von Figur 1 auf Platinen angeordnet und mit einer Robotersteuerung (12) verbunden sein.

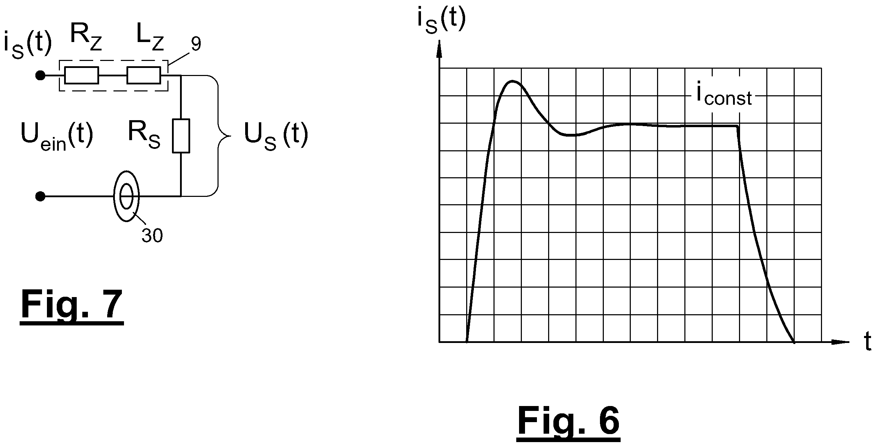

Im gezeigten Ausführungsbeispiel wird mit einem Gleichstrom geschweißt. Dieser kann konstant sein oder aus einem oder mehreren Stromimpulsen bestehen, z.B. gemäß Figur 6. Hierfür weist der an eine Stromversorgung angeschlossene Schweißumrichter (21) einen steuerbaren Wechselrichter (25) auf, der einen gepulsten Wechselstrom mit einstellbarer Frequenz und Amplitude erzeugt und über eine Leitung (51) zum Schweißgleichrichter (26) leitet.

Der Schweißgleichrichter (26) weist einen Transformator (27) auf, an den primärseitig die Leitung (51) und sekundärseitige eine Gleichrichterschaltung (28) angeschlossen ist. Er ist über Anschlussstellen (49,50) mit dem Stromkreis im Schweißgerät (9), insbesondere der Schweißzange, verbunden.

Zur Messung des Schweißstroms ist eine Messeinrichtung (30) vorgesehen, die einfach oder mehrfach vorhanden und an geeigneter Stelle der Schweißvorrichtung (8) angeordnet sein kann. In den gezeigten Ausführungsbeispielen befindet sie sich in der Steuer- und Versorgungseinrichtung (10), z.B. im Schweißumrichter (21) oder im Schweißgleichrichter (26). Sie kann alternativ am Schweißgerät (9) angeordnet sein.

An den Anschlussstellen (49,50) besteht ein Spannungsabgriff (29) für die gleichgerichtete Sekundärspannung des Transformators (27). Der Spannungsabgriff (29) ist über eine Leitung (51) mit einem Steuermodul (22) der Steuer- und Versorgungseinrichtung (10) verbunden, welches z.B. im Schweißumrichter (21) oder an anderer geeigneter Stelle angeordnet ist.

Die Schweißsteuerung beinhaltet eine Recheneinheit bzw. einen Mikroprozessor nebst Datenspeichern und Eingabe-/Ausgabe-Schnittstellen. In der Schweißsteuerung (20) können Schweißprogramme abgelegt und von der Steuerung abgearbeitet werden. Ferner können Technologiedatenbanken hinterlegt sein, in der anwendungsspezifische Prozessparameter gespeichert sind und abgerufen werden können. Die Schweiß- oder Prozessparameter können auf den jeweiligen Arbeitspunkt (52) bzw. Schweißpunkt am Werkstück (7) bezogen und entsprechend mit dessen Ortskoordinaten oder einer anderen Identifizierung verknüpft sein.

Die Schweißsteuerung (20) kann einen Sollwert (33) für den einzustellenden Schweißstrom ausgeben und z.B. dem Schweißumrichter (21) zuleiten. Die Schweißsteuerung (20) kann ferner ein Steuersignal, insbesondere ein Aktivierungssignal (32), an das Steuermodul (22) im Schweißumrichter (21) ausgeben. Das Aktivierungssignal (32) kann einen Start des Schweißprozesses und/oder einer nachfolgend erläuterten Kalibrierung bzw. Erfassung bewirken.

Der Schweißumrichter (21) beinhaltet einen Stromregler (24), der z.B. ein Bestandteil des Steuermoduls (22) ist und der einerseits von der Schweißsteuerung (20) mit dem Sollwert (33) für den Schweißstrom beaufschlagt wird und andererseits ein Istwertsignal (34) für den tatsächlich im Schweißstromkreis fließenden Schweißstrom erhält. Der Stromregler (24) beaufschlagt den Wechselrichter (25) zur Erzeugung des gewünschten gepulsten Wechselstroms. Hierbei kann z.B. mit einer Pulsweitenmodulation und/oder Pulsfrequenzmodulation gearbeitet werden.

Ferner kann das Steuermodul (22) eine Auswerteeinrichtung (23) beinhalten, mit der Kenngrößen des Schweißprozesses erfasst und verarbeitet werden. Die Auswerteeinrichtung (23) kann außerdem den Istwert (34) für den Schweißstrom an den Stromregler (24) ausgeben. Sie kann eine Recheneinheit mit mindestens einem Mikroprozessor und ein oder mehrere Datenspeicher für Programme, Messwerte, Rechenwerte und andere Daten nebst Eingabe-/Ausgabe-Schnittstellen beinhalten.

Die Schweißsteuerung (20), der Stromregler (24) und die Auswerteeinrichtung (23) können hardwaremäßig oder softwaremäßig ausgebildet sein. Bei einer hardwaremäßigen Schaltungsausbildung können sie in einem separaten Steuergerät untergebracht oder als Platinen in einer vorhandenen Steuerung, z.B. der Robotersteuerung (12), angeordnet sein. Das Steuermodul (22) muss außerdem nicht im Schweißumrichter (21) angeordnet sein, sondern kann sich an anderer Stelle befinden, z.B. in der Schweißsteuerung (20).

Figur 4 und 5 verdeutlichen schematisch die Anordnung von Stromzuführungen (19) zwischen den elektrischen Anschlussstellen (49,50) und den Zangenarmen (14,15). Diese Stromzuführungen (19) können flexibel sein und den Zangenarmbewegungen folgen. Sie bestehen hierfür z.B. aus mehreren U-förmig gebogenen und in dichter Anlage aufeinander geschichteten Kupferbändern oder anderen elektrischen Leitern, die für die Übertragung der hohen Schweißströme geeignet sind. Im Laufe der Betriebszeit können Risse oder andere Schäden an den Stromzuführungen (19) auftreten, die den elektrischen Widerstand im Stromkreis des Schweißgeräts (9) verändern und den Schweißprozess beeinflussen können.

Mit der besagten integrierten oder internen Messeinrichtung (30) wird der Schweißstrom gemessen. Die Messeinrichtung (30) kann hierfür in beliebig geeigneter Bauart, z.B. als Stromsensor, ausgebildet sein. Im gezeigten Ausführungsbeispiel umfasst die Messeinrichtung (30) mindestens eine elektrische Spule (46), die einen elektrischen Leiter (51) umgibt und den dort fließenden und ggf. gepulsten Strom über das induzierte elektromagnetische Feld misst.

Im Ausführungsbeispiel von Figur 4 ist die Messeinrichtung (30) sekundärseitig an einer Leitung (51) zwischen der Anschlussstelle (49) und einer sekundärseitigen Anzapfstelle des Transformators (27) angeordnet und umgibt den elektrischen Leiter (51) Sie kann sich in dem an der Zange (9) angeordneten Schweißgleichrichter (26) befinden. In der Variante von Figur 5 ist die Messeinrichtung (30) auf der Primärseite des Transformators (27) angeordnet und befindet sich z.B. an der Leitung (51) zwischen dem Wechselrichter (25) und dem Transformator (27). Sie kann z.B. im Schweißumrichter (21) oder im Schweißgleichrichter (26) angeordnet sein.

In beiden Fällen speist die Messeinrichtung (30) oder der sog. Arbeitssensor sein Messsignal (35) für den Schweißstrom in das Steuermodul (22) und dessen Auswerteeinrichtung (23) ein.

In der Auswerteeinrichtung (23) werden die Messsignale ausgewertet und verglichen. Hierbei können der Auswerteeinrichtung (23) Module (38,40) für die Istwert-Aufbereitung der Strommess-Signale des Arbeitssensors (30) und der Spannungsmess-Signale des Spannungsabgriffs (29) für die Zangenspannung vorgeschaltet sein. Zu einer solchen Istwert-Aufbereitung gehören z.B. eine Digitalisierung mit einer Analog-Digital-Wandlung der Messsignale mit genügend hoher Sample-Rate, von z.B. 200 k sample/s und ggf. einer Mittelwertbildung.

Für die elektrische Schweißvorrichtung (8) ist eine Serviceeinrichtung (2) vorgesehen, die eine oder mehrere Einrichtungskomponenten (3,4,5,6) aufweisen kann.

Eine Einrichtungskomponente kann z.B. eine Kalibriereinrichtung (3) für die Messeinrichtung (30) bzw. den Stromsensor sein. Dessen Messgenauigkeit beeinflusst den von der Auswerteeinrichtung (23) ausgegebenen Istwert (34) des Schweißstroms und die Stromregelung.

Die Kalibriereinrichtung (3) weist mindestens eine eigene Messeinrichtung (31) für den Schweißstrom auf, die extern vom Schweißgerät (9) angeordnet ist und die mit dem Schweißgerät (9) in Funktionsverbindung gebracht werden kann. Die Messeinrichtung (31) ist zusätzlich zu der Messeinrichtung (30) der Schweißvorrichtung vorgesehen und wird nachfolgend als weitere Messeinrichtung (31), insbesondere als Referenzsensor, bezeichnet.

Die weitere Messeinrichtung (31) kann z.B. gemäß Figur 1 im Arbeitsbereich des Manipulators (11) und räumlich getrennt vom Schweißgerät (9) angeordnet sein, z.B. an einem Träger (45). Hierbei kann es sich z.B. um einen stationären Ständer handeln. In einer anderen, nicht dargestellten Ausführungsform kann ein Träger (45) mit der weiteren Messeinrichtung (31) am Schweißgerät (9), vorzugsweise an dessen Außenseite, angeordnet sein und beweglich, z.B. als Schwenkarm mit einem steuerbaren Antrieb, ausgebildet sein.

Die Messeinrichtung (31) dient zur Kalibrierung und Referenzierung des Arbeitssensors (30) und kann ebenfalls als Stromsensor und als sog. Referenzsensor ausgebildet sein. Die Messeinrichtungen bzw. Stromsensoren (30,31) können gleichartig ausgebildet sein. Im gezeigten Ausführungsbeispiel weist hierfür der Referenzsensor (31) ebenfalls eine elektrische Messspule (46) auf.

Die Messeinrichtung (31) wirkt vorzugsweise an einer definierten und stets gleich bleibenden Stelle des Schweißgeräts (9). Sie befindet sich vorzugsweise im Bereich der Elektroden (16,17) in Schließstellung und misst den zwischen den Elektroden (16,17) fließenden Strom. Hierfür wird z.B. gemäß Figur 1 zu Kalibrierzwecken die Schweißzange (9) vom Manipulator (11) zum Referenzsensor (31) bewegt und mit ihren Elektroden (16,17) auf dem oder am Referenzsensor (31) geschlossen. Die Schweißzange (9) ist in dieser Kalibrierstellung in Figur 1 abgebrochen und gestrichelt dargestellt.

Bei der eingangs genannten Variante eines stationären Schweißgeräts (9) kann der Referenzsensor (31) mit einem Träger (45) am Schweißgerät (9) angeordnet sein. Er kann alternativ von einem Manipulator (11) oder auf andere Weise zugeführt werden.

EP 2 353 766 B1

Figur 2 verdeutlicht in einer abgebrochenen und vergrößerten Darstellung die Ausbildung und Anordnung einer Referenz-Messeinrichtung (31). Die Messspule (46) ist auf einem elektrisch leitenden Spulenträger (47), z.B. einer Kupferplatte, an dessen Oberseite angeordnet. Sie kann sich alternativ an der Unterseite oder an beiden Seiten befinden. Die Elektrode (16) taucht durch den Innenraum der liegenden Messspule (46) und kontaktiert den Spulenträger (47). Der Spulenträger (47) kann mit der Messspule (46) ausweichfähig, z.B. schwimmend, am Sensorträger (45) gelagert sein.

Der Spulenträger (47) kann ferner an der Oberseite und/oder der Unterseite eine Elektrodenaufnahme (48) aufweisen, mit der formschlüssig ein definierter Elektrodenkontakt hergestellt werden kann. Die Elektrodenaufnahme (48) kann z.B. als eine Vertiefung oder Senkung an der Oberfläche des Spulenträgers (47) ausgebildet sein, die an die Außenform der Elektrode (16,17) oder ihrer Elektrodenkappe angepasst und die z.B. eine Trichterform besitzt. Die ausweichfähige Lagerung und die Elektrodenaufnahme (48) ermöglichen eine Zentrierung und eine Kompensation von Zustelltoleranzen sowie eine Lagedefinition der Elektroden (16,17). Über die schrägen Flanken der Elektrodenaufnahme (48) findet ein definierter und z.B. ringförmiger Strom leitender Kontakt zwischen der oder den Elektroden (16,17) und der Elektrodenaufnahme (48) statt. Die zumindest eine Elektrode (16,17) umgebende Messspule (46) misst dabei den durchfließenden Strom.

Bei dieser Variante kontaktieren beide Elektroden (16,17) in Schließstellung den stromleitenden plattenförmigen Träger (45). In einer anderen Variante kann die ringförmige Messspule in anderer Weise gehalten sein, wobei die beiden Elektroden (16,17) durch den freien Spuleninnenraum greifen und einander direkt kontaktieren.

Die Messeinrichtungen (30,31), z.B. deren Messspulen (46), sind an eine gemeinsame Auswerteeinrichtung (23) angeschlossen. Die Signalübertragung kann per Leitung (51) oder drahtlos erfolgen. Für das Signal (36) des Referenzsensors (31) kann ebenfalls ein vorgeschaltetes Modul (39) für die Istwert-Aufbereitung vorgesehen sein. Der Proportionalitätsfaktor der Referenz-Messeinrichtung (31), insbesondere ihrer Messspule (46), ist bekannt und in geeigneter Weise hinterlegt. Er kann in der Auswerteeinrichtung (23) eingegeben werden, z.B. durch ein Speichermodul (42).

Zur Kalibrierung der Istwerterfassung des Schweißstroms und des Arbeitssensors (30) gibt die Schweißsteuerung (20) ein Aktivierungs- und Steuersignal (32) an das Steuermodul (22). Daraufhin wird die Kalibrierung gestartet und mindestens ein Stromimpuls im Zangenstromkreis generiert und die Messung durchgeführt. Die Signale beider Messeinrichtungen (30,31) werden zeitgleich erfasst und ausgewertet. Hierfür kann der Generator für den Schweißstrom, z.B. der Schweißumrichter (21) bzw. die Auswerteeinrichtung (23), mit zwei gleich aufgebauten Kanälen für die Istwerterfassung des Schweißstroms und der Signale (35,36) der beiden Messeinrichtungen (30,31) ausgestattet sein. Ferner ist ein Kanal für die Erfassung der Zangenspannung (37) vorgesehen.

Alle drei Kanäle können gleichzeitig angesteuert werden, wobei die Messsignale gleichzeitig erfasst und ausgewertet werden. Ihre Ansteuerung kann synchron oder ggf. auch mit einem kurzem Vorlauf zu der Generierung des Schweißstromes erfolgen, wobei im zweitgenannten Fall der Strom- und Spannungsimpuls von Anfang an erfasst werden kann.

Die Erfassung und Auswertung der Messsignale (35,36) für den Strom und ggf. des Spannungssignals (37) kann mehrmals und mit hoher Frequenz geschehen. Die Erfassung und Auswertung kann insbesondere in Koppelung, vorzugsweise synchron, mit der pulsweisen Stromgenerierung, z.B. bei einer Pulsweitenmodulation, erfolgen. Durch eine zeitliche Koppelung kann sichergestellt werden, dass während des Stromimpulsdauer die Messung erfolgt. Insbesondere kann bei einer primärseitigen Impulsgenerierung jeder Impuls erfasst und ausgewertet werden. Alternativ ist eine Erfassung und Auswertung bei jedem 2. oder 3. Impuls oder in sonstiger Taktkoppelung möglich. Die Erfassungs- und Auswertefrequenz kann z.B. 200 kHz bzw. 200.000 Messwerte/sec betragen.

Die Messwerte werden gespeichert und mittels einer schnellen und leistungsfähigen Recheneinheit verarbeitet. Hierbei können Mittelwerte und Effektivwerte gebildet werden, die auf den einzelnen Generierungspuls des Wechselrichters (25) oder auf mehrere Impulse bezogen sind. Die Auswertung erfolgt vorzugsweise im Schweißumrichter (21) und in dessen Steuermodul (22), das sowohl die Pulsgenerierung, als auch die Erfassung und Auswertung startet und steuert. Dies ist aus Zeit- und Synchronitätsgründen günstig und erlaubt die Vermeidung von Phasenverschiebungen zwischen den Zyklen bzw. Takten der Pulsgenerierung und der Messwerterfassung. Im Schweißbetrieb kann die gleiche Koppelung, insbesondere die gleiche Synchronisierung, zwischen Pulsgenerierung und Istwerterfassung des Stroms durch den Arbeitssensor (30) vorgenommen werden. Die Kalibrierung erfolgt dadurch in hoher und prozessbezogener Genauigkeit.

Durch diese Anordnung wird gewährleistet, dass die Ergebnisse der beiden Stromkanäle und die Signale (35,36) des Arbeits- und Referenzsensors direkt vergleichbar sind. Zum anderen wird erreicht, dass die am Spannungsabgriff (29) erfasste Zangenspannung (37) bzw. die Ausgangsspannung am Schweißgleichrichter (26) keine Phasenverschiebung zum erfassten Schweißstrom aufweist. Dies sorgt für eine korrekte mathematische Berechnung der elektrischen Kenngrößen der Schweißzange und der Istwerte für Schweißstrom, Schweißspannung, Schweißleistung und Schweißwiderstand. Dies wiederum ist günstig für eine genaue Prozessregelung beim Widerstandsschweißen.

Das Schweißgerät (9) bzw. die Schweißzange wird durch den Referenzsensor (31) auf den Spulenträger (47) geschlossen. Anschließend generiert der Schweißumrichter (21) einen impulsartigen Schweißstrom, der z.B. einen zeitlichen Verlauf gemäß des Diagramms von Figur 6 hat und beide Sensoren (30,31) durchfließt. Die Signale (35,36) der Stromsensoren werden gleichzeitig und in gleicher Art und Weise ausgewertet und miteinander verglichen. Hieraus ermittelt die Auswerteeinrichtung (23) einen Korrekturwert oder Proportionalitätsfaktor für den Arbeitssensor (30), der in einem Modul (41) gespeichert werden kann und der zur Berechnung und Ausgabe des Istwerts (34) für den vom Arbeitssensor (30) gemessenen Schweißstrom herangezogen wird. Der Proportionalitätsfaktor kann ein Einzelwert, ein Kennfeld oder eine Funktion sein.

Die Serviceeinrichtung (2) kann ferner eine Erfassungseinrichtung (4) für den elektrischen Widerstand des Schweißgeräts (9), insbesondere der elektrischen Widerstands-Punktschweißzange, aufweisen. Zur Erfassung des elektrischen bzw. ohmschen Widerstands wird die vorgenannte Erfassung der Zangenspannung über den Spannungsabgriff (29) herangezogen. Wie Figur 7 an einem Schemaschaltbild verdeutlicht, wird unter der Annahme eines konstanten Stroms der ohmsche Zangenwiderstand (Rz) durch Divison der gemessenen Zangen- oder Eingangsspannung (Uein) durch die gemessene tatsächliche bzw. kalibrierte Stromstärke (i) ermittelt. (U) und (i) werden dabei gleichzeitig abgegriffen. Die Messung kann z.B. in der letzten Einschaltphase des Schweißimpulses gemäß Figur 6 erfolgen, wo der Strom (i) im wesentlichen konstant und der induktive Widerstand vernachlässigbar ist. Die Messung kann mehrmals durchgeführt werden, wobei die Messwerte gespeichert, Mittelwerte gebildet und hieraus der Zangenwiderstand (Rz) berechnet wird. Die Auswerteeinrichtung (23) führt diese Erfassung durch und speichert den ermittelten Wert für den elektrischen Zangenwiderstand in einem angeschlossenen Modul (43).

Die Kalibrierung des Arbeitssensors (30) und die Erfassung des elektrischen Zangenwiderstands können gleichzeitig oder zumindest kurz nacheinander stattfinden. Die Widerstandserfassung kann während des Schweißbetriebs mehrmals durchgeführt werden, wobei die ermittelten Widerstandswerte einzeln gespeichert werden können. Die Auswerteeinrichtung (23) kann durch Vergleich dieser Werte eine etwaige Veränderung des elektrischen Zangenwiderstands und einen Trend feststellen.

Bei nachbearbeiteten bzw. gereinigten Elektroden (16,17) oder Elektrodenkappen ist ein etwaiger Trend, insbesondere ein steigender Zangenwiderstand, ein Indiz für signifikante Änderungen an den stromleitenden Teilen des Schweißgeräts (9). Dies können insbesondere die auf Biegung belasteten Stromzuführungen (19) sein. U.U. entstehen auch Risse in den Zangenarmen (14,15). Durch die Widerstandsüberwachung können solche allmählich sich entwickelnden Schäden oder Beeinträchtigungen des Schweißprozesses rechtzeitig erkannt und über eine entsprechende Wartung bzw. vorbeugende Instandhaltung behoben werden. Die Auswerteeinrichtung (23) signalisiert einen entsprechenden Wartungsbedarf oder ggf. auch ein Alarmsignal.

Die Serviceeinrichtung (2) kann ferner eine Erfassungseinrichtung (5) für die Induktivität (Lz) des Schweißgeräts (9) aufweisen. Die am Werkstück (7) geschlossene Schweißzange bildet einen spulenartigen stromdurchflossenen Leiter. Die Zangen-Induktivität wird von der Existenz und Eintauchtiefe des Werkstücks (7) beeinflusst. Wenn am Werkstück (7) mehrere Schweißpunkte (52), Nähte oder sonstige Schweißstellen zu setzen sind, ist an jeder Schweißstelle bzw. jedem Arbeitspunkt (52) u.U. eine andere Induktivität vorhanden. In der automatisierten Fertigung kann die Zangeninduktivität am gleichen Schweißpunkt als konstant betrachtet werden.

Betrachtet wird die Induktivität (Lz) eines auf dem Werkstück (7) geschlossenen zangenförmigen Schweißgeräts (9) gemessen ab den Anschlussstellen (49,50) bei stromleitendem Elektrodenkontakt ohne Schweißfunktion. Die Kenntnis dieser Induktivität ist bedeutsam zur exakten Ermittlung der Istwerte für Schweißspannung, Schweißleistung und Schweißwiderstand im Schweißbetrieb. Sie kann anhand des Schaltbilds von Figur 7 mit der Formel berechnet werden

$$Uein(t) = Rz*i(t) + Lz*di(t)/dt + Us(t)$$

Mit dieser Formel kann die Induktivität (Lz) unter Maßgabe eines definierten Stromimpulses bzw. Messimpulses, z.B. eines einfachen Rechteckimpulses, ermittelt werden. Die Erfassung wird z.B. zum Zeitpunkt t = 0 durchgeführt, wenn noch kein Strom fließt. Der zeitabhängige Widerstand Rz*i(t) und die zwischen den Elektrodenenden und über das Werkstück abfallende Spannung Us(t) sind zu diesem Zeitpunkt Null.

Die Zangeninduktivität (Lz) bestimmt sich für t = 0 nach der Formel:

$$Lz = (Uein(0) / (di(0)/dt)$$

Die zeitliche Veränderung des Stroms (di(0)/dt) bei diesem Messimpuls kann messtechnisch mittels des kalibrierten Arbeitssensors (30) aus dem unmittelbar anschließenden Stromanstieg und zu einem nachfolgenden Zeitpunkt erfasst werden.

Der für einen oder mehrere Arbeitspunkte (52) erfasste Induktivitätswert (Lz) kann von der Auswerteeinrichtung (23) in einem angeschlossenen Modul (44) mit Ortsbezug gespeichert werden. Der Ortsbezug kann z.B. durch Ortskoordinaten oder durch eine Reihenfolge bzw. Nummerierung der Arbeitspunkte (52) gemäß Vorgabe eines Schweißprogramms hergestellt werden.

In einer Variante ohne Berücksichtigung des Werkstückeinflusses kann die Induktivität (Lz) mit einem unter direktem Elektrodenkontakt kurzgeschlossenen Schweißgerät (9) oder mit einem auf der Messeinrichtung (31) geschlossenen Schweißgerät (9) ermittelt werden. Der ohmsche Widerstand und der Spannungsabfall Us(t) an den Kontaktstellen der Elektroden (16,17) und der evtl. eingespannten Messeinrichtung (31), insbesondere des Spulenträgers (47), kann dabei ggf. vernachlässigt werden.

Die an der Schweißstelle (52) im Schweißprozess auftretende Schweißspannung (Us(t)) lässt sich nur schwer direkt messen. Die genaue Erfassung der für den Schweißprozess maßgeblichen Kenngrößen des elektrischen Widerstandes und der Induktivität des zangenförmigen Schweißgeräts (9) und die genauen Messmöglichkeiten für den Schweißstrom is (t) und die an den Anschlussstellen (49,50) anliegende Spannung Uein(t) ermöglicht eine Modellbildung gemäß des Schaltkreises von Figur 7 und eine rechnerische Erfassung der Schweißspannung (Us(t)) und des ohmschen Widerstandes (Rs(t)) an der Schweißstelle, insbesondere im flüssigen Schweißbad. Die Schweißspannung (Us(t)) lässt sich anhand der erfassten Kenngrößen nach der Formel berechnen:

$$Us(t) \ = \ Uein(t) \ - \ Rz*i(t\ )- \ Lz*di(t)/dt$$

Aus der Schweißspannung (Us) kann der elektrische Widerstand (Rs) an der Schweißstelle bestimmt werden nach der Formel

$$Rs \ = \ Us(t) \ / \ is(t)$$

Bei den Rechnungen wurde die Induktivität der Messspule (46) vernachlässigt. Sie ist in ihrer Größe bekannt und kann alternativ in die Rechnungen einbezogen werden.

Die genaue Kenngrößenerfassung ermöglicht im konventionellen Betrieb unterschiedliche Regelmodi. Beispielsweise kann der Schweißstrom (is) vom Schweißumrichter (21) geregelt und die vom Schweißgleichrichter (26) an den Anschlussstellen (49,50) abgegebene Spannung (Uein) begrenzt werden. Das Regelkonzept kann auch umgedreht werden, wobei die Eingangsspannung (Uein) oder die Schweißspannung (Us) geregelt und der Schweißstrom (is) begrenzt wird. Ferner ist es möglich, die Schweißleistung (U*i) zu regeln oder die Schweißleistung zu begrenzen.

Darüber hinaus ermöglicht die Kenngrößenerfassung und die Kalibrierung auch eine adaptive Regelung des Schweißprozesses. Hierfür kann die Serviceeinrichtung (2) eine adaptive Regeleinrichtung (6) aufweisen. Diese ist z.B. dem Schweißumrichter (21) und dem Steuermodul (22) zugeordnet. Das Steuermodul (22) ist über eine Steuerleitung mit dem Zangenantrieb (18) einer Schweißzange (9) verbunden und steuert diesen zur Änderung der Zangenschließkraft (F) an, mit der die Elektroden (16,17) gegen das Werkstück (7) gedrückt werden. Figur 5 zeigt diese Anordnung.

Die Schweißzange (9) kann kraftgeregelt sein, wobei eine vorgegebene Anpresskraft (F) eingehalten wird. Der Schweißprozess wird ansonsten in der vorbeschriebenen Weise nach dem Schweißstrom, der Schweißspannung oder der Schweißleistung geregelt. Während des Prozesses wird laufend von der Auswerteeinrichtung (23) die Schweißspannung (Us) und der elektrische Schweißwiderstand (Rs) ermittelt. Die entsprechende Werte werden innerhalb jedes Schweißimpulses mehrmals aufgenommen. Für den Schweißwiderstand (Rs) kann aus Probeschweißungen ein Toleranzfeld mit oberen und unteren Schwellgrenzen vorgegeben sein, das ggf. von der Zeit bzw. dem Impulsverlauf abhängig ist. Wenn der Schweißwiderstand (Rs) sich verändert und aus dem Toleranzfeld zu gleiten droht, kann die Regeleinrichtung (6) dem über eine entsprechende Veränderung der Anpresskraft (F) entgegenwirken.

Der an der Schweißstelle bestehende ohmsche bzw. elektrische Gesamtwiderstand zwischen den Elektrodenenden hängt u.a. vom Kontakt bzw. Übergangswiderstand der Materiallagen des Werkstücks (7) sowie vom Materialwiderstand und vom Übergangswiderstand bzw. von der Eintauchtiefe der Elektrodenspitzen oder -kappen im Schweißbad bzw. am Werkstück (7) und der damit zusammenhängenden Größe der stromübertragenden Kontaktflächen zusammen. Wenn der Schweißwiderstand (Rs) über das zulässige Maß ansteigt, kann die Anpresskraft (F) erhöht und die Kontaktfläche zwischen den Materiallagen sowie die Elektrodenkontaktfläche vergrößert werden. Wenn umgekehrt der Schweißwiderstand (Rs) in unzulässiger Weise sinkt, kann durch den Zangenantrieb (19) die Anpresskraft (F) verringert und die Kontaktfläche zwischen den Materiallagen sowie die Elektrodenkontaktfläche verkleinert werden. Um ein Ablösen einer Elektrode (16,17) zu verhindern, kann die Schweißzange (9) ein Federelement (nicht dargestellt) aufweisen, das z.B. an mindestens einem Zangenarm (14,15) angeordnet ist und das eine an der Schweißstelle wirkende Mindest-Anpresskraft sicherstellt.

Die anderen Schweißparameter, insbesondere der Schweißstrom, die Spannung (Uein) und die Leistung können von dieser adaptiven Regelung über den Schweißwiderstand (Rs) und die Anpresskraft (F) unbelastet sein. Ergänzend kann außerdem bei der adaptiven Regelung auch für die Schweißspannung (Us) ein Toleranzfeld vorgegeben und überwacht werden. Auch die Schweißspannung (Us) wird über die Anpresskraft (F) beeinflusst.

Wie Figur 1 verdeutlicht, kann der externe Stromsensor (31) an einem Träger oder Ständer (45) im Arbeitsbereich des Manipulators (11) angeordnet sein und mit der Schweißzange (9) kontaktiert werden. Die Serviceeinrichtung (2) kann weitere Zusatzeinrichtungen aufweisen, die ggf. auch am Ständer (45) angeordnet sind. Dies kann z.B. eine Kappenwechselvorrichtung (53) und/oder eine Kappenfräsvorrichtung (54) sein. Zudem kann eine Kalibriervorrichtung (55) für die Schweißzange (9), insbesondere für ihren Tool-Center-Point (TCP) vorhanden sein. Diese Vorrichtungen (53,54,55) können z.B. entsprechend der WO 03/008 145 A1 ausgebildet sein. Auf diese zusätzlichen Einrichtungen (53,54,55) kann alternativ verzichtet werden.

Die Kalibriereinrichtung (3) und die Erfassungseinrichtungen (4,5) für den elektrischen Widerstand und die Induktivität des Schweißgeräts (9) sowie die adaptive Regeleinrichtung (6) sind voneinander unabhängig und können einzeln sowie in beliebiger Kombination benutzt werden. Bei einer adaptiven Regelung kann eine Stromkalibrierung z.B. auf andere Weise als im vorbeschriebenen Ausführungsbeispiel stattfinden. Desgleichen kann auch die Erfassung des elektrischen Widerstands und der Induktivität der Schweißzange auf andere Weise erfolgen. Auf eine oder mehrere der vorbeschriebenen Einrichtungen (3,4,5,6) kann auch in einer anderen Ausführungsform verzichtet werden. Zudem können die Kalibrier-, Erfassungs- und Regeleinrichtungen (3,4,5,6) integrierter Bestandteil der Steuer- und Versorgungseinrichtung (10) sein und einer anderen Komponente dieser Einrichtung (10) zugeordnet sein. Die Steuer- und Versorgungseinrichtung (10) kann insgesamt oder in Teilen, z.B. im Umfang der Schweißsteuerung (20), in eine andere Steuerung integriert sein. Der Schweißumrichter (21) kann z.B. extern angeordnet sein.

Abwandlungen der gezeigten und beschriebenen Ausführungsformen sind in verschiedener Weise möglich. Die Serviceeinrichtung (2) bzw. die Komponenten (3,4,5,6) sind auch bei anderen Schweißprozessen einsetzbar. Dies betrifft z.B. den Fall eines Schweißens mit elektrischem Wechselstrom. In diesem Fall entfällt der Gleichrichter. Die Erfassung der prozessrelevanten Kenngrößen, insbesondere der Ströme und Spannungen, kann auf entsprechend angepasste andere Weise und mit anderer Messtechnik erfolgen. Die Messeinrichtungen (30,31) können beliebig und insbesondere auch unterschiedlich ausgebildet sein. Die adaptive Regelung bzw. Regeleinrichtung (6) hat eigenständige erfinderische Bedeutung und kann mit einem in beliebiger Weise kalibrierten Schweißgerät (9) und mit auf beliebige Weise gewonnenen Kenngrößen durchgeführt werden. Desgleichen haben auch die anderen Komponenten (3,4,5) der Serviceeinrichtung (2) eine eigene erfinderische Bedeutung und sind voneinander unabhängig.

Im gezeigten Ausführungsbeispiel wird mit einem Einzelimpuls pro Schweißstelle (52) gearbeitet, wobei der sekundärseitige einzelne längere Schweißimpuls aus mehreren primärseitigen hochfrequenten Spannungs- bzw. Stromimpulsen des Wechselrichters (25), z.B. durch Pulsweitenmodulation, gebildet werden kann. Alternativ kann mit jeweils mehreren sekundären Impulsen pro Schweißstelle gearbeitet werden, sog. Mehrpulsschweißen. Dies kann ebenfalls abgewandelt werden. Beispielsweise kann mit Einzel- oder Mehrfachimpulsen geschweißt werden, die von einer Kondensatorbatterie abgegeben werden. Dies kann dem Kondensator-Entladungsschweißen entsprechen, wobei das Schweißgerät (9) und die Steuer- und Versorgungseinrichtung (10) entsprechend angepasst ist. Elektrische Energie kann auch in einer Spulenanordnung gespeichert und für einen Schweißimpuls entladen werden.

Die beanspruchte Serviceeinrichtung (2) und/oder deren Komponenten (3,4,5,6) können für ein einzelnes oder für mehrere Schweißgeräte (9) eingesetzt werden. Z.B. kann eine zentrale Serviceeinrichtung (2), insbesondere eine zentrale Messeinrichtung (31) einer Kalibriereinrichtung (3), zwischen mehreren Manipulatoren (11) mit Schweißgeräten (9) angeordnet sein. Das Messignal (36) wird dabei auf verschiedene Steuer- und Versorgungseinrichtungen (10), insbesondere Schweißumrichter (21), umgeschaltet.

Die Erfindung hat mehrere nachfolgend genannte besondere Aspekte, die einzeln für sich und in Kombination untereinander bedeutsam sind.

Für mehrere Schweißgeräte (9) ist eine gemeinsame weitere Messeinrichtung (31) mit Anschluss- und Umschaltmöglichkeit an verschiedene Steuer- und Versorgungseinrichtungen (10) vorgesehen.

Die Messeinrichtungen (30,31) sind auf der Sekundärseite des Transformators (27) angeordnet.

Ein Spulenträger (47) einer elektrischen Messspule (46) ist als elektrisch leitende Platte mit beidseitigen Elektrodenaufnahmen (48), insbesondere Ansenkungen, ausgebildet.

Bei einer Schweißvorrichtung (8) ist zur Ermittlung der Schweißspannung ein Spannungsabgriff (29) an den Anschlussstellen (49,50) des Schweißgeräte-Stromkreises angeordnet und mit der Auswerteeinrichtung (23) verbunden.

Beim Serviceverfahren oder Kalibrierverfahren und bei der Serviceeinrichtung (2) wird mit der Auswerteeinrichtung (23) ein Korrekturfaktor für die Arbeits-Messeinrichtung (30) ermittelt und in einen Stromregler (24) der Steuer- und Versorgungseinrichtung (10) einspeist.

Die in den Ansprüchen genannten und mit der Auswerteeinrichtung (23) durchgeführten Verfahrensschritte sind zugleich Funktionsmerkmale der Auswerteeinrichtung (23).

Die Auswerteeinrichtung (23) kann die Eingangsspannung und die Stromstärke mehrmals erfassen, Mittelwerte bilden und hieraus den ohmschen Widerstand des Schweißgeräts ermitteln und speichern. Die Auswerteeinrichtung (23) kann außerdem die ermittelten Widerstandswerte speichern und eine Trenderfassung durchführen. Die Auswerteeinrichtung (23) kann ferner außergewöhnliche Widerstandsänderungen des Schweißgeräts (9) signalisieren.

Die Steuer- und Versorgungseinrichtung (10) der Schweißvorrichtung (8) weist eine Schweißsteuerung (20) und einen Schweißumrichter (21) auf, wobei die Auswerteeinrichtung (23) in der Schweißsteuerung (20) oder in einem Steuermodul (22) des Schweißumrichters (21) angeordnet ist.

Die Steuer- und Versorgungseinrichtung (10) speichert Induktivitätswerte verschiedener Arbeitspunkte (52) mit Ortsbezug und wertet sie zur Steuerung oder Regelung des Schweißstroms im Betrieb aus.

Die Serviceeinrichtung (2) weist eine oder mehrere weitere Vorrichtung (53,54,55) zur Bearbeitung von Elektroden (16,17) oder deren Kappen und/oder zur Kalibrierung von Ortsbezügen des Schweißgeräts (9) auf.

Die Serviceeinrichtung (2) und ggf. die adaptive Regeleinrichtung (6) sowie das zugehörige Service- und ggf. Regelverfahren können Bestandteil(e) der Schweißvorrichtung (8) und ggf. des Schweißverfahrens sein. Die adaptive Regeleinrichtung (6) und das adaptive Regelungsverfahren haben eigenständige Bedeutung und können im Schweißbetrieb unabhängig von einer Kalibrierung der Strom-Messeinrichtung (30) durchgeführt werden.

BEZUGSZEICHENLISTE

| | |
|---|---|
| 1 | Bearbeitungsstation, Schweißstation |
| 2 | Serviceeinrichtung |
| 3 | Kalibriereinrichtung für Stromsensor |
| 4 | Erfassungseinrichtung für elektr. Widerstand |
| 5 | Erfassungseinrichtung für Induktivität |
| 6 | adaptive Regeleinrichtung |
| 7 | Werkstück |
| 8 | Schweißvorrichtung |
| 9 | Schweißgerät, el. Widerstands-Punktschweißzange |
| 10 | Steuer- und Versorgungseinrichtung |
| 11 | Manipulator, Roboter, Schweißroboter |
| 12 | Robotersteuerung |
| 13 | Roboterhand |
| 14 | Zangenarm |
| 15 | Zangenarm |
| 16 | Elektrode |
| 17 | Elektrode |
| 18 | Zangenantrieb |
| 19 | Stromzuführung |
| 20 | Schweißsteuerung |
| 21 | Schweißumrichter |
| 22 | Steuermodul Umrichter |
| 23 | Auswerteeinrichtung |
| 24 | Stromregler |
| 25 | Wechselrichter |
| 26 | Schweißgleichrichter |
| 27 | Transformator |
| 28 | Gleichrichterschaltung |
| 29 | Spannungsabgriff |
| 30 | Messeinrichtung, Stromsensor, Arbeitssensor |
| 31 | Messeinrichtung, Stromsensor, Referenzsensor |
| 32 | Steuersignal Kalibrierung |
| 33 | Sollwert Schweißstrom |
| 34 | Istwert Schweißstrom |
| 35 | Signal Arbeitssensor |
| 36 | Signal Referenzsensor |
| 37 | Signal Zangenspannung |
| 38 | Modul Istwert-Aufbereitung Arbeitssensor |
| 39 | Modul Istwert-Aufbereitung Referenzsensor |
| 40 | Modul Istwert-Aufbereitung Zangenspannung |
| 41 | Modul Proportionalitätsfaktor Arbeitssensor |

42    Modul Proportionalitätsfaktor Referenzsensor
43    Modul Zangenwiderstand
44    Modul Zangeninduktivität
45    Träger für Sensor, Ständer
46    Spule, Messspule
47    Spulenträger, Platte
48    Elektrodenaufnahme, Senkung
49    Anschlussstelle, Eingangstelle
50    Anschlussstelle, Ausgangstelle
51    Leitung
52    Arbeitspunkt am Werkstück
53    Kappenwechselvorrichtung
54    Kappenfräsvorrichtung
55    Kalibriervorrichtung Schweißzange

## Patentansprüche

1. Serviceeinrichtung für eine elektrische Schweißvorrichtung (8) mit einem Schweißgerät (9), insbesondere einer elektrischen Widerstands-Punktschweißzange, und einer Steuer- und Versorgungseinrichtung (10), wobei die Schweißvorrichtung (8) eine Messeinrichtung (30) und eine Auswerteeinrichtung für den Schweißstrom aufweist, **dadurch gekennzeichnet, dass** die Serviceeinrichtung (2) eine Kalibriereinrichtung (3) für die Messeinrichtung (30) und eine Auswerteeinrichtung (23) aufweist, wobei die Kalibriereinrichtung (3) eine weitere Messeinrichtung (31) für den im Schweißgerät (9) fließenden Schweißstrom aufweist und wobei die Messeinrichtungen (30,31) im Betrieb an diegemeinsame Auswerteeinrichtung (23) angeschlossen sind, in der die Messergebnisse der Messeinrichtungen (30,31) ausgewertet werden.

2. Serviceeinrichtung nach Anspruch 1, **dadurch gekennzeichnet, dass** die Messeinrichtungen (30,31) gleichartig, insbesondere als Stromsensoren ausgebildet sind.

3. Serviceeinrichtung nach Anspruch 1 oder 2, **dadurch gekennzeichnet, dass** die Messeinrichtung (31) der Kalibriereinrichtung (3) für eine Anordnung und Strommessung im Bereich der geschlossenen Elektroden (16,17) des Schweißgeräts (9) ausgebildet ist.

4. Serviceeinrichtung nach Anspruch 1, 2 oder 3, **dadurch gekennzeichnet, dass** die Messeinrichtung (31) der Kalibriereinrichtung (3) im Betrieb extern im Arbeitsbereich eines Manipulators (11) oder am Manipulator (11) oder am Schweißgerät (9) angeordnet ist.

5. Serviceeinrichtung nach einem der vorhergehenden Ansprüche, **dadurch gekennzeichnet, dass** die Messeinrichtung (31) eine elektrische Messspule (46) aufweist, die auf einem stationären oder ausweichfähigen und bevorzugt elektrisch leitenden Spulenträger (47) angeordnet ist, der eine bevorzugt formschlüssige Elektrodenaufnahme (48) im Spuleninnenraum aufweist.

6. Serviceeinrichtung nach einem der vorhergehenden Ansprüche, **dadurch gekennzeichnet, dass** die Auswerteeinrichtung (23) im Betrieb in einer Steuer- und Versorgungseinrichtung (10) der elektrischen Schweißvorrichtung (8) angeordnet ist.

7. Serviceeinrichtung nach einem der vorhergehenden Ansprüche, **dadurch gekennzeichnet, dass** die Messeinrichtungen (30,31) über Module zur Istwert-Aufbereitung (38,39) mit der Auswerteeinrichtung (23) signaltechnisch verbunden sind.

8. Serviceeinrichtung nach einem der vorhergehenden Ansprüche, **dadurch gekennzeichnet, dass** die Serviceeinrichtung (2) eine Erfassungseinrichtung (4) für den elektrischen Widerstand und eine Erfassungseinrichtung (5) für die Induktivität des Schweißgeräts (9) aufweist.

9. Serviceeinrichtung nach einem der vorhergehenden Ansprüche, **dadurch gekennzeichnet, dass** die Serviceeinrichtung (2) eine adaptive Regeleinrichtung (6) aufweist, wobei eine Steuer- und Versorgungseinrichtung (10) der Schweißvorrichtung (8) aus der ermittelten Eingangsspannung, einem ermittelten elektrischen Widerstand und der Induktivität des Schweißgeräts (9) ein Erfassungsmodell für die an der Schweißstelle abfallende Spannung Us und den dortigen elektrischen Widerstand bildet und das Schweißgerät (9) zur Veränderung seiner Schließkraft ansteuert.

**10.** Elektrische Schweißvorrichtung mit einem Schweißgerät (9), insbesondere einer elektrischen Widerstands-Punktschweißzange, einer Steuer- und Versorgungseinrichtung (10) und einer Serviceeinrichtung (2) für die elektrische Schweißvorrichtung (8), wobei die Schweißvorrichtung (8) eine Messeinrichtung (30) und eine Auswerteeinrichtung für den Schweißstrom aufweist, **dadurch gekennzeichnet, dass** die Serviceeinrichtung (2) nach einem der Ansprüche 1 bis 9 ausgebildet ist.

**11.** Serviceverfahren für eine elektrische Schweißvorrichtung (8) mit einem Schweißgerät (9), insbesondere einer elektrischen Widerstands-Punktschweißzange, und einer Steuer- und Versorgungseinrichtung (10), wobei die Schweißvorrichtung (8) eine Messeinrichtung (30) und eine Auswerteeinrichtung für den Schweißstrom aufweist, **dadurch gekennzeichnet, dass** das Serviceverfahren mit einer Serviceeinrichtung (2) ausgeführt wird, die eine Kalibriereinrichtung (3) für die Messeinrichtung (30) mit einer weiteren Messeinrichtung (31) für den im Schweißgerät (9) fließenden Schweißstrom und eine Auswerteeinrichtung (23) aufweist, wobei die Messeinrichtung (30) mit der Kalibriereinrichtung (3) kalibriert wird, wobei der im Schweißgerät (9) fließende Schweißstrom mit der weiteren Messeinrichtung (31) der Kalibriereinrichtung (3) gemessen wird und die Messergebnisse der Messeinrichtungen (30,31) in der gemeinsamen Auswerteeinrichtung (23) ausgewertet werden.

**12.** Serviceverfahren nach Anspruch 11, **dadurch gekennzeichnet, dass** die Strommessung mit den Messeinrichtungen (30,31) und die Auswertung gleichzeitig erfolgen.

**13.** Serviceverfahren nach Anspruch 11 oder 12, **dadurch gekennzeichnet, dass** die Strommessung mit den Messeinrichtungen (30,31) an eine Impulsgenerierung des Stroms gekoppelt wird, wobei die Strommessung und die Impulsgenerierung des Stroms synchronisiert werden.

**14.** Serviceverfahren nach Anspruch 11, 12 oder 13, **dadurch gekennzeichnet, dass** mit der Auswerteeinrichtung (23) bei konstantem Strom die Eingangsspannung und die Stromstärke erfasst und hieraus der ohmsche Widerstand des Schweißgeräts (9) ermittelt und gespeichert wird.

**15.** Serviceverfahren nach einem der Ansprüche 11 bis 14, **dadurch gekennzeichnet, dass** bei geschlossenem Schweißgerät (9) an einem Arbeitspunkt (52) eines Werkstücks (7) die Steuer- und Versorgungseinrichtung (10) zur Abgabe von mindestens einem Stromimpuls eingestellt wird, wobei mit der Auswerteeinrichtung (23) der Strom erfasst, das Differential di/dt gebildet und die Induktivität des Schweißgeräts (9) ermittelt wird.

**16.** Serviceverfahren nach einem der Ansprüche 11 bis 15, **dadurch gekennzeichnet, dass** bei einer adaptive Regelung des Schweißprozesses eine Steuer- und Versorgungseinrichtung (10) der Schweißvorrichtung (8) aus einer ermittelten Eingangsspannung, einem ermittelten elektrischen Widerstand und einer ermittelten Induktivität des Schweißgeräts (9) ein Erfassungsmodell für die an der Schweißstelle abfallende Spannung Us und den dortigen elektrischen Widerstand bildet und das Schweißgerät (9) zur Veränderung seiner Schließkraft und zur Beeinflussung des elektrischen Widerstands ansteuert.

**Claims**

**1.** Service device for an electrical welding system (8) with a welding unit (9), in particular an electrical resistance spot welding gun, and a control and supply device (10), the welding system (8) having a measuring device (30) and an evaluating device for the welding current, **characterized in that** the service device (2) has a calibrating device (3) for the measuring device (30) and an evaluating device (23), the calibrating device (3) having a further measuring device (31) for the welding current flowing in the welding unit (9) and the measuring devices (30, 31) being connected during operation to the common evaluating device (23), in which the measurement results of the measuring devices (30, 31) are evaluated.

**2.** Service device according to Claim 1, **characterized in that** the measuring devices (30, 31) are designed identically, in particular as current sensors.

**3.** Service device according to Claim 1 or 2, **characterized in that** the measuring device (31) of the calibrating device (3) is designed for being arranged and for measuring current in the region of the closed electrodes (16, 17) of the welding unit (9).

4. Service device according to Claim 1, 2 or 3, **characterized in that** the measuring device (31) of the calibrating device (3) is arranged during operation externally within the working range of a manipulator (11) or on the manipulator (11) or on the welding unit (9).

5. Service device according to one of the preceding claims, **characterized in that** the measuring device (31) has an electrical measuring coil (46), which is arranged on a stationary or yielding and preferably electrically conducting coil carrier (47), which has a preferably form-fitting electrode holder (48) in the space inside the coil.

6. Service device according to one of the preceding claims, **characterized in that** the evaluating device (23) is arranged in operation in a control and supply device (10) of the electrical welding system (8).

7. Service device according to one of the preceding claims, **characterized in that** the measuring devices (30, 31) are connected to the evaluating device (23) in signalling terms by way of modules for actual-value preprocessing (38, 39).

8. Service device according to one of the preceding claims, **characterized in that** the service device (2) has a sensing device (4) for the electrical resistance and a sensing device (5) for the inductance of the welding unit (9).

9. Service device according to one of the preceding claims, **characterized in that** the service device (2) has an adaptive control device (6), a control and supply device (10) of the welding system (8) forming a sensing model for the voltage Us dropping across the welding location and the electrical resistance there from the determined input voltage, a determined electrical resistance and the inductance of the welding unit (9) and activating the welding unit (9) to vary the closing force thereof.

10. Electrical welding system with a welding unit (9), in particular an electrical resistance spot welding gun, a control and supply device (10) and a service device (2) for the electrical welding system (8), the welding system (8) having a measuring device (30) and an evaluating device for the welding current, **characterized in that** the service device (2) is designed according to one of Claims 1 to 9.

11. Service method for an electrical welding system (8) with a welding unit (9), in particular an electrical resistance spot welding gun, and a control and supply device (10), the welding system (8) having a measuring device (30) and an evaluating device for the welding current, **characterized in that** the service method is performed with a service device (2), which has a calibrating device (3) for the measuring device (30) with a further measuring device (31) for the welding current flowing in the welding unit (9) and has an evaluating device (23), the measuring device (30) being calibrated with the calibrating device (3), the welding current flowing in the welding unit (9) being measured with the further measuring device (31) of the calibrating device (3) and the measurement results of the measuring devices (30, 31) being evaluated in the common evaluating device (23).

12. Service method according to Claim 11, **characterized in that** the current measurement with the measuring devices (30, 31) and the evaluation take place at the same time.

13. Service method according to Claim 11 or 12, **characterized in that** the current measurement with the measuring devices (30, 31) is coupled to the pulsed generation of the current, the current measurement and the pulsed generation of the current being synchronized.

14. Service method according to Claim 11, 12 or 13, **characterized in that** the input voltage and the current intensity at a constant current are sensed with the evaluating device (23) and from this the ohmic resistance of the welding unit (9) is determined and stored.

15. Service method according to one of Claims 11 to 14, **characterized in that**, with the welding unit (9) closed, the control and supply device (10) is set for emitting at least one current pulse at a working point (52) of the workpiece (7), the current being sensed with the evaluating device (23), the differential di/dt formed and the inductance of the welding unit (9) determined.

16. Service method according to one of Claims 11 to 15, **characterized in that**, with an adaptive control of the welding process, a control and supply device (10) of the welding system (8) forms a sensing model for the voltage Us dropping across the welding location and the electrical resistance there from a determined input voltage, a determined electrical resistance and a determined inductance of the welding unit (9) and activates the welding unit (9) to vary the closing force thereof and to influence the electrical resistance.

**Revendications**

1. Dispositif de service destiné à un système de soudage électrique (8) comportant un appareil de soudage (9), notamment une pince de soudage par points à résistance électrique, et un dispositif de commande et d'alimentation (10), dans lequel le système de soudage (8) comporte un dispositif de mesure (30) et un dispositif d'évaluation destiné au courant de soudage, **caractérisé en ce que** le dispositif de service (2) comporte un dispositif d'étalonnage (3) destiné au dispositif de mesure (30) et un dispositif d'évaluation (23), dans lequel le dispositif d'étalonnage (3) comporte un autre dispositif de mesure (31) destiné au courant passant dans l'appareil de soudage (9) et dans lequel les dispositifs de mesure (30, 31), lors du fonctionnement, sont raccordés au dispositif d'évaluation commun (23), dans lequel les résultats de mesure des dispositifs de mesure (30, 31) sont évalués.

2. Dispositif de service selon la revendication 1, **caractérisé en ce que** les dispositifs de mesure (30, 31) sont réalisés de manière identique, notamment sous la forme de capteurs de courant.

3. Dispositif de service selon la revendication 1 ou 2, **caractérisé en ce que** le dispositif de mesure (31) du dispositif d'étalonnage (3) est conçu pour un agencement et une mesure de courant dans la région des électrodes fermées (16, 17) de l'appareil de soudage (9).

4. Dispositif de service selon la revendication 1, 2 ou 3, **caractérisé en ce que** le dispositif de mesure (31) du dispositif d'étalonnage (3), lors du fonctionnement, est disposé à l'extérieur, dans la zone de travail d'un manipulateur (11) ou sur le manipulateur (11) ou sur l'appareil de soudage (9).

5. Dispositif de service selon l'une quelconque des revendications précédentes, **caractérisé en ce que** le dispositif de mesure (31) comporte une bobine de mesure électrique (46) qui est disposée sur un support de bobine (47) stationnaire ou pouvant être écarté et de préférence électriquement conducteur, qui comporte un réceptacle pour électrode (48), de préférence à complémentarité de forme, dans l'espace intérieur de la bobine.

6. Dispositif de service selon l'une quelconque des revendications précédentes, **caractérisé en ce que** le dispositif d'évaluation (23), lors du fonctionnement, est disposé dans un dispositif de commande et d'alimentation (10) du système de soudage électrique (8).

7. Dispositif de service selon l'une quelconque des revendications précédentes, **caractérisé en ce que** les dispositifs de mesure (30, 31) sont reliés par une technique de transmission de signal au dispositif d'évaluation (23) par l'intermédiaire de modules destinés à fournir une valeur réelle (38, 39).

8. Dispositif de service selon l'une quelconque des revendications précédentes, **caractérisé en ce que** le dispositif de service (2) comporte un dispositif de détection (4) destiné à la résistance électrique et un dispositif de détection (5) destiné à l'inductance de l'appareil de soudage (9).

9. Dispositif de service selon l'une quelconque des revendications précédentes, **caractérisé en ce que** le dispositif de service (2) comporte un dispositif de régulation adaptative (6), dans lequel un dispositif de commande et d'alimentation (10) du système de soudage (8) calcule un modèle de détection destiné à la tension Us chutant à l'emplacement du soudage et la résistance électrique observée à cet emplacement, à partir de la tension d'entrée déterminée, d'une résistance électrique déterminée et de l'inductance de l'appareil de soudage (9), et commande l'appareil de soudage (9) afin de modifier sa force de fermeture.

10. Dispositif de soudage électrique comportant un appareil de soudage (9), notamment une pince de soudage par points à résistance électrique, un dispositif de commande et d'alimentation (10) et un dispositif de service (2) destiné au système de soudage (8), dans lequel le système de soudage (8) comporte un dispositif de mesure (30) et un dispositif d'évaluation destiné au courant de soudage, **caractérisé en ce que** le dispositif de service (2) est réalisé selon l'une des revendications 1 à 9.

11. Procédé de service destiné à un système de soudage électrique (8) comportant un appareil de soudage (9), notamment une pince de soudage par points à résistance électrique, et un dispositif de commande et d'alimentation (10), dans lequel le système de soudage (8) comporte un dispositif de mesure (30) et un dispositif d'évaluation destiné au courant de soudage, **caractérisé en ce que** le procédé de service est mis en oeuvre avec un dispositif de service (2) qui comporte un dispositif d'étalonnage (3) destiné au dispositif de mesure (30), comportant un autre dispositif de mesure (31) destiné au courant passant dans l'appareil de soudage (9) et un dispositif d'évaluation (23), dans lequel le dispositif de mesure (30) est étalonné au moyen du dispositif d'étalonnage (3), dans lequel le courant de soudage passant dans l'appareil de soudage (9) est mesuré au moyen de l'autre dispositif de mesure (31) du dispositif d'étalonnage (3) et les résultats de mesure des dispositifs de mesure (30, 31) sont évalués dans le dispositif d'évaluation commun (23).

12. Procédé de service selon la revendication 11, **caractérisé en ce que** la mesure de courant au moyen des dispositifs de mesure (30, 31) et l'évaluation sont effectuées simultanément.

13. Procédé de service selon la revendication 11 ou 12, **caractérisé en ce que** la mesure de courant au moyen des dispositifs de mesure (30, 31) est couplée à une génération d'impulsion du courant, dans lequel la mesure de courant et la génération d'impulsion du courant sont synchronisées.

14. Procédé de service selon la revendication 11, 12 ou 13, **caractérisé en ce que** la tension d'entrée et l'intensité du courant sont détectées et **en ce que** la résistance ohmique de l'appareil de soudage (9) est déterminée à partir de celles-ci et est stockée au moyen du dispositif d'évaluation (23) lorsque le courant est constant.

15. Procédé de service selon l'une quelconque des revendications 11 à 14, **caractérisé en ce que** le dispositif de commande et d'alimentation (10) est réglé pour délivrer au moins une impulsion de courant, dans lequel le courant est détecté au moyen du dispositif d'évaluation (23), la différentielle di/dt est calculée et l'inductance de l'appareil de soudage (9) est déterminée lorsque l'appareil de soudage (9) est fermé, au niveau d'un point de travail (52) d'une pièce à usiner (7).

16. Procédé de service selon l'une quelconque des revendications 11 à 15, **caractérisé en ce que**, lors d'une régulation adaptative du processus de soudage, un dispositif de commande et d'alimentation (10) du dispositif de soudage (8) calcule un modèle de détection destiné à la tension Us chutant à l'emplacement de soudage et la résistance électrique observée à cet emplacement, à partir d'une tension d'entrée déterminée, d'une résistance électrique déterminée et d'une inductance déterminée de l'appareil de soudage (9), et commande l'appareil de soudage (9) afin de modifier sa force de fermeture et d'agir sur la résistance électrique.

**Fig. 1**

**Fig. 2**

**Fig. 3**

**Fig. 4**

EP 2 353 766 B1

**Fig. 5**

$i_S(t)$   $R_Z$   $L_Z$   9

$U_{ein}(t)$   $R_S$   $U_S(t)$

30

**Fig. 7**

$i_S(t)$

$i_{const}$

t

**Fig. 6**

EP 2 353 766 B1

**EP 2 353 766 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2739215 A
- DE 20106635 U
- WO 03008145 A1